# EUROPEAN PATENT SPECIFICATION

(11) **EP 2 498 205 B1**
(45) Date of publication and mention of the grant of the patent: **21.09.2016**
(21) Application number: 12158205.0
(22) Date of filing: 06.03.2012
(51) Int. Cl.: G06K 15/02, G03G 15/00, G06F 3/12

(54) **Image forming apparatus**
Bilderzeugungsvorrichtung
Appareil de formation d'images

(30) Priority: 09.03.2011 JP 2011051276
(43) Date of publication of application: 12.09.2012
(73) Proprietor: Ricoh Company, Ltd., Tokyo 143-8555 (JP)
(72) Inventor: Kubo, Naohiko, Tokyo 143-8555 (JP); Yamamoto, Kohji, Tokyo 143-8555 (JP); Igarashi, Yasuyuki, Tokyo 143-8555 (JP); Inoue, Takayuki, Tokyo 143-8555 (JP); Saito, Yuka, Tokyo 143-8555 (JP); Masui, Daisuke, Tokyo 143-8555 (JP)
(74) Representative: Schwabe - Sandmair - Marx

(56) References cited:
- EP-A1- 2 085 911
- US-A1- 2002 012 129
- US-A1- 2003 090 697
- US-A1- 2007 283 155
- US-B1- 6 366 744

## Description

### BACKGROUND OF THE INVENTION

### 1. Field of the Invention

The present invention relates to an image forming apparatus.

### 2. Description of the Related Art

When a printing job (printing data) is sent from a host apparatus such as a personal computer (PC) or the like to an image forming apparatus such as a multi function printer (MFP), a laser printer (LP) or the like, if only A3-sized paper is installed in a designated tray although the printing data is designated to be printed on A4-sized paper of by a printing condition of a print job, for example, the printing operation cannot be performed.

Similarly, for example, when staples are not installed although the printing job includes a printing condition such that the printed documents are to be stapled, for example, the printing operation cannot be performed.

In such cases, the image forming apparatus reports to a user that a printing operation is suspended because an occurrence of an error is detected to have the user input an additional instruction, such as to use papers in another tray for continuing the printing operation, to cancel the stapling of the printed document or the like, to continue the printing operation.

In Patent Document 1, an image forming apparatus by which the number of printing pages is appropriately determined before a printing operation is started to preserve productivity, is disclosed.

However, once an error has occurred, especially in a mechanical part of the image forming apparatus, for the image forming apparatus which just reports that the printing operation is suspended because of the occurrence of an error is detected, the image forming apparatus cannot continue a subsequent printing job. Thus, such an error interferes with not only the printing job for which the error is detected, but also potentially other printing jobs, until the user comes in front of the image forming apparatus to remove the cause for the error.

Further, the image forming apparatus as disclosed in JPH11-231730 can only deal with the shortage of paper.

From US 2007 / 028 31 55 a print control data generating apparatus for use in multifunction peripheral devices is known. It has a print control data outputting unit for outputting control data generated by its print control data generation unit. The print management system is an information processor that receives a print job generated by a host computer and transmits the job to the printer. The management system is able to instruct another printer to execute substitute printing for a malfunctioned printer if any error occurs.

US 2003 / 00 90 697 deals with the idea of redirecting a print job from the main printer to a "buddy printer", if the main printer is unable to print the job. This happens, for example, if the main printer runs out of memory with a too complex print job, and the "buddy printer" has a larger memory capacity or greater processing power.

EP 2 085 911 discloses a printer that detects the paper size in the manual feeding tray. If it is not in agreement with the size designated in the job file sent by the host computer, the wrong sized sheet is ejected and the print data is held in the printer's memory.

### SUMMARY OF THE INVENTION

The present invention is made in light of the above problems, and provides an image forming apparatus capable of preventing a state in which printing operations including a subsequent printing job cannot be performed because of an occurrence of an error by a preceding printing job.

The invention is defined by claim 1. Preferred embodiments are set out in the dependent claims.

### BRIEF DESCRIPTION OF THE DRAWINGS

Other objects, features and advantages of the present invention will become more apparent from the following detailed description when read in conjunction with the accompanying drawings.
Fig. 1 is a flowchart showing a related example of an operation for a general image forming apparatus;
Fig. 2 is a block diagram showing an example of a structure of an image forming apparatus of an embodiment;
Fig. 3 is a flowchart showing a first exemplified operation;
Fig. 4 is a flowchart showing a second exemplified operation;
Fig. 5 is a flowchart showing a third exemplified operation;
Fig. 6 is a flowchart showing the fourth exemplified operation;
Fig. 7 is an example of a data structure of a table used in a fourth exemplified operation; and
Fig. 8A and Fig. 8B are flowcharts showing a fifth exemplified operation.

### DETAILED DESCRIPTION OF THE PREFERRED EMBODIMENTS

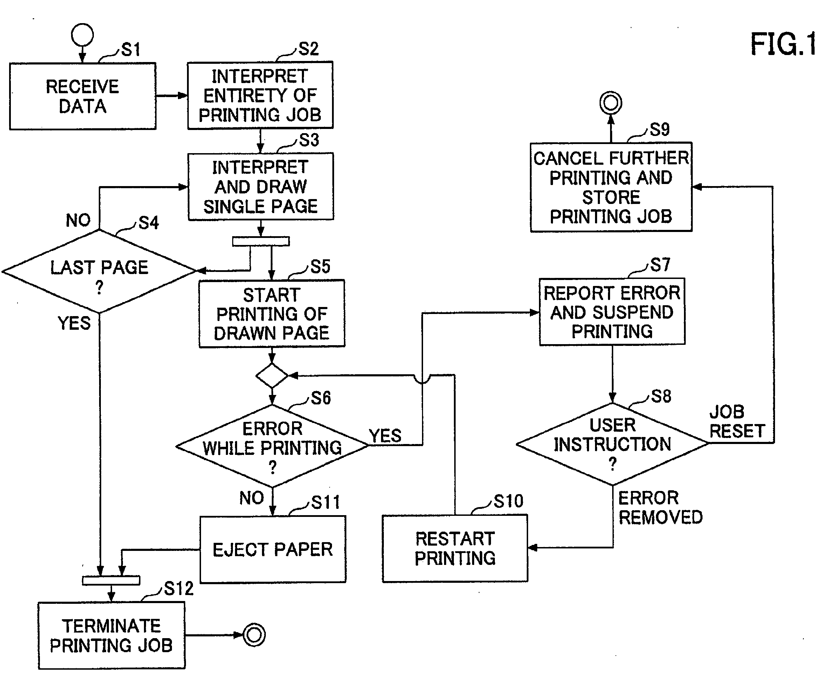

Before describing of the present invention, the related example will be explained in detail with reference to Fig. 1 in order to facilitate the understanding of the present invention.

Fig. 1 is a flowchart showing an example of an operation for a general-purpose image forming apparatus.

When the printing data is received (step S1), a printing condition for an entirety of a printing job is interpreted (step S2) and then data for each of the pages is interpreted to be drawn (step S3).

Then, it is determined whether the last page is drawn (step S4), and when the last page is not yet drawn (No in step S4), the process goes back to step S3 for a next page.

Further, after the data for a single page is interpreted and drawn (step S3), the drawn page is started to be printed (step S5), and whether an error occurs during printing (while printing) is detected (step S6).

When an error occurs during printing, the occurrence of the error is reported to a user and printing is suspended (step S7).

Then, when an instruction by the user is accepted (step S8), the printing operation is canceled when the user instructs to reset the printing job. At this time, the printing job is stored in a memory device and the printing job is terminated (step S9).

When the cause of the error is removed by the instructions from the user or by the user (for example, papers are supplied when the error is a shortage of papers), or when the printing condition is changed so that the error is removed (for example, the designated tray in which papers are in short supply is changed to another in the printing condition when the error is a shortage of papers or the like) and continuation of the printing operation is instructed, the printing operation is restarted (step S10), and the process goes back to monitoring an occurrence of an error during printing (step S6).

When any error occurs during printing, the paper is ejected (step S11), and when all of the pages are printed (ejected), the printing job is terminated (step S12).

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

### (SYSTEM STRUCTURE)

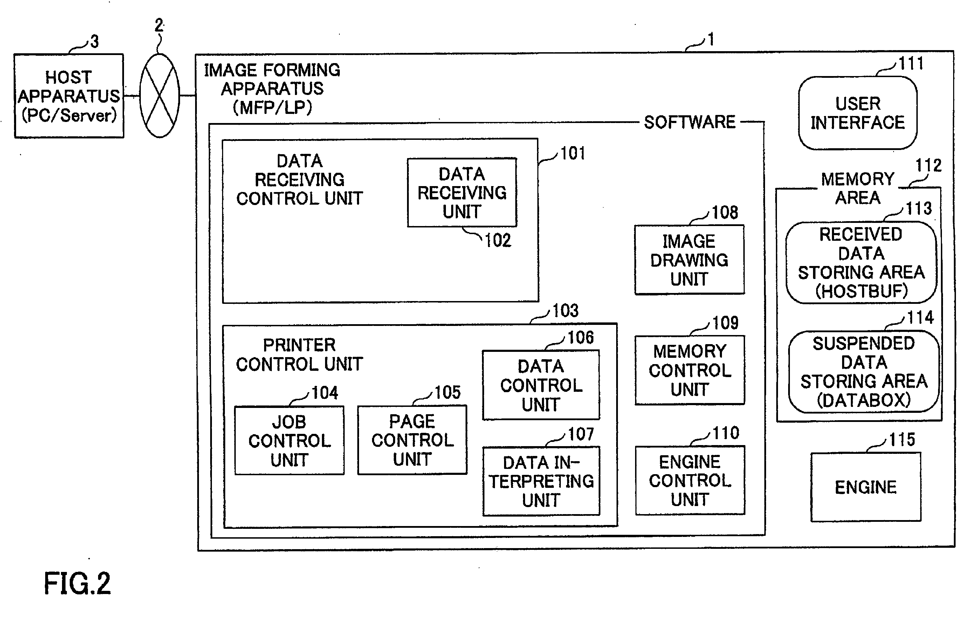

Fig. 2 is a block diagram showing an example of a structure of an image forming apparatus 1 of an embodiment.

The image forming apparatus 1 may be a multi function printer (MFP), a laser printer (LP) or the like. As shown in Fig. 2, a host apparatus 3 such as a personal computer (PC), a server or the like is connected to the image forming apparatus 1 via a network 2 such as a Local Area Network (LAN) or the like. The host apparatus 3 operates the image forming apparatus 1 to perform a printing operation by sending a printing job to the image forming apparatus 1.

The image forming apparatus 1 includes a data receiving control unit 101, a printer control unit 103, an image drawing unit 108, a memory control unit 109, and an engine control unit 110, which are functional units actualized by software (a computer program) operated on computer hardware installed in the image forming apparatus 1.

The data receiving control unit 101 includes a data receiving unit 102. The printer control unit 103 includes a job control unit 104, a page control unit 105, a data control unit 106, and a data interpreting unit 107.

The image forming apparatus 1 further includes a user interface 111, a memory area 112 (memory unit), and an engine 115.

The memory area 112 is composed of a received data storing area 113 (HOSTBUF) and a suspended data storing area 114 (DATABOX).

The data receiving control unit 101 has a function to control an operation of receiving data from the host apparatus 3. The data receiving unit 102 has a function of processing received data.

The printer control unit 103 has a function to control a printing operation by the engine 115. The job control unit 104 has a function to control processing the printing job of printing a document composed of a single page or plural pages. The page control unit 105 has a function to control processing each of the pages included in a printing job. The data control unit 106 has a function to control data related to printing. The data interpreting unit 107 has a function to interpret content of data.

The image drawing unit 108 has a function to form image data based on a document to be printed included in a printing job.

The memory control unit 109 has a function to control reserving and releasing memory used for processing of printing or the like.

The engine control unit 110 has a function to control the engine 115.

The user interface 111 is an input/output device such as a control panel or the like and has a function to accept an input operation by a user and report information to the user.

The memory area 112 is composed by a memory device such as a memory, a Hard Disk Drive (HDD), or the like. The received data storing area 113 is an area in which data received from the host apparatus 3 is stored. The suspended data storing area 114 is an area in which data of a printing job for which printing is suspended or canceled is stored.

The engine 115 is a mechanical unit such as an electrophotographic printer or the like.

### (FIRST EXEMPLIFIED OPERATION)

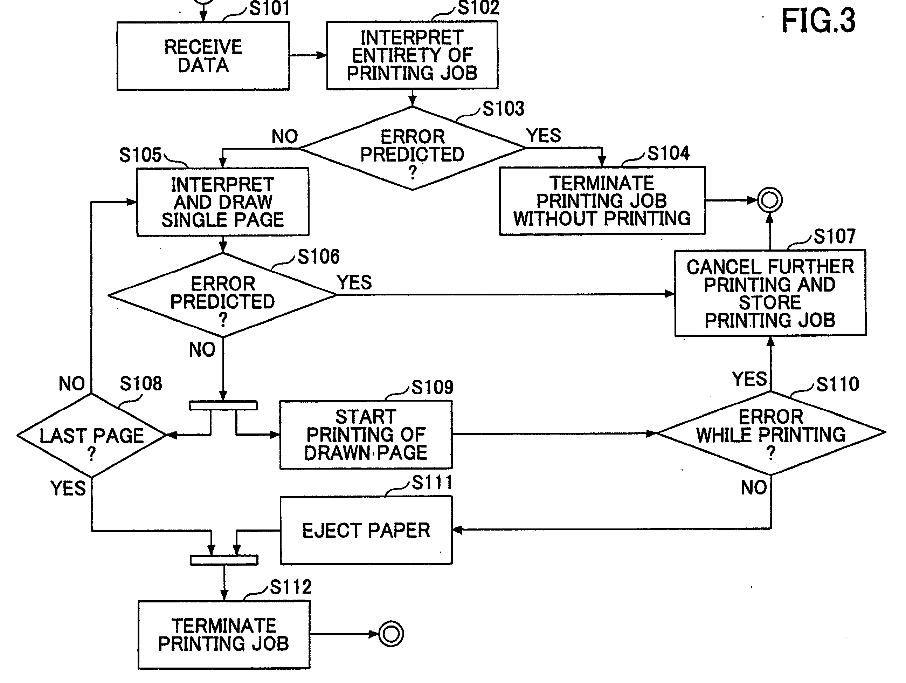

Fig. 3 is a flowchart of a first exemplified operation in which a printing job is canceled when an occurrence of an error is detected and the printing job is stored.

In Fig. 3, when the data receiving unit 102 receives data of a printing job (step S101), the job control unit 104 controls the data interpreting unit 107 to interpret a printing condition of an entirety of the printing job (step S102).

The job control unit 104 determines whether an occurrence of an error is predicted based on the interpretation of the printing condition of the entirety of the printing job by the data interpreting unit 107 (step S103).

When the occurrence of an error is predicted (YES in step S103), the job control unit 104 terminates the printing job without performing a printing operation and stores the printing job in the suspended data storing area 114 (step S104). When a subsequent job exists, the job control unit 104 starts processing the subsequent job.

When the occurrence of an error is not predicted in step S103 (NO in step S103), under the control of the job control unit 104, the page control unit 105 controls the data interpreting unit 107 to interpret print data of a single page and controls the image drawing unit 108 to draw image data for the single page (step S105).

Then, the job control unit 104 determines whether an occurrence of an error is predicted or not based on the interpretation and drawing result of the single page (step S106).

When the occurrence of an error is predicted (YES in step S106), the job control unit 104 cancels the further printing operation for the printing job and stores the printing job in the suspended data storing area 114 to terminate the printing job (step S107). When a subsequent job exists, the job control unit 104 starts processing the subsequent job.

When the occurrence of an error is not predicted (NO in step S106), the job control unit 104 determines whether the last page of the printing job is drawn (step S108), and when the last page of the printing job is not yet drawn (NO in step S108), the process goes back to step S105. The printer control unit 103 stores and controls the number of drawn pages.

When it is determined that the last page of the printing job is drawn in step S108 (YES in step S108), the printing job is terminated when all of the pages are printed (step S112).

Further, when the occurrence of an error is not predicted in step S106 (NO in step S106), the job control unit 104 controls the page control unit 105 to start printing of the drawn page (step S109), and monitors whether an error occurs during printing (step S110).

When an occurrence of an error is detected during printing (YES in step S110), the job control unit 104 cancels further printing of the printing job, and stores the printing job in the suspended data storing area 114 to terminate the printing job (step S107).

When the occurrence of an error is not detected during printing (NO in step S110), the engine 115 ejects a paper (step S111), and when all of the pages are printed (ejected), the job control unit 104 terminates the printing job (step S112). When a subsequent printing job exists, the job control unit 104 starts processing the printing job.

An example of an error which is predicted to occur in step S103 after the printing condition of the entirety of the printing job is interpreted may be, when an image forming apparatus does not have a mechanism to staple documents although the printing job includes a printing condition such that the printed documents are to be stapled, for example. In this example, the job control unit 104 determines that an occurrence of an error is predicted when the printing job includes the printing condition such that the printed documents are to be stapled and information that a function capable of stapling documents is active is not included in device management information of the image forming apparatus 1, which may be stored in the memory area 112.

An example of an error which is predicted to occur in step S106 after the interpretation and drawing of the single page may be a case when the paper size of the single page is different from the paper size of papers installed in a tray designated in a printing condition included in the printing job. In this example, the job control unit 104 determines whether the designated paper size is the same as that of the papers installed in the designated tray based on information about the designated paper size for the pages and the designated tray in the printing condition included in the printing job and information about the paper size of papers installed in the designated tray in the device management information, and determines that an occurrence of an error is predicted when the paper sizes are not the same.

An example of an error which occurs during printing in step S110 may be that the remaining number of papers becomes zero during printing or the like. In this example, the job control unit 104 determines that the occurrence of an error is detected during printing when the remaining number of papers of the designated tray becomes zero in the device management information.

These errors are just examples and the errors are not limited to these. Any errors by which the printing operation cannot be continued anymore so that it is necessary for the printing operation to be terminated are included.

Further, a user can input an instruction via the user interface 111 to reprint based on the printing job which is stored in the suspended data storing area 114 by the prediction or the detection of the occurrence of an error, similar to the case for a printing job which the user causes to be stored in the memory area 112.

### (SECOND EXEMPLIFIED OPERATION)

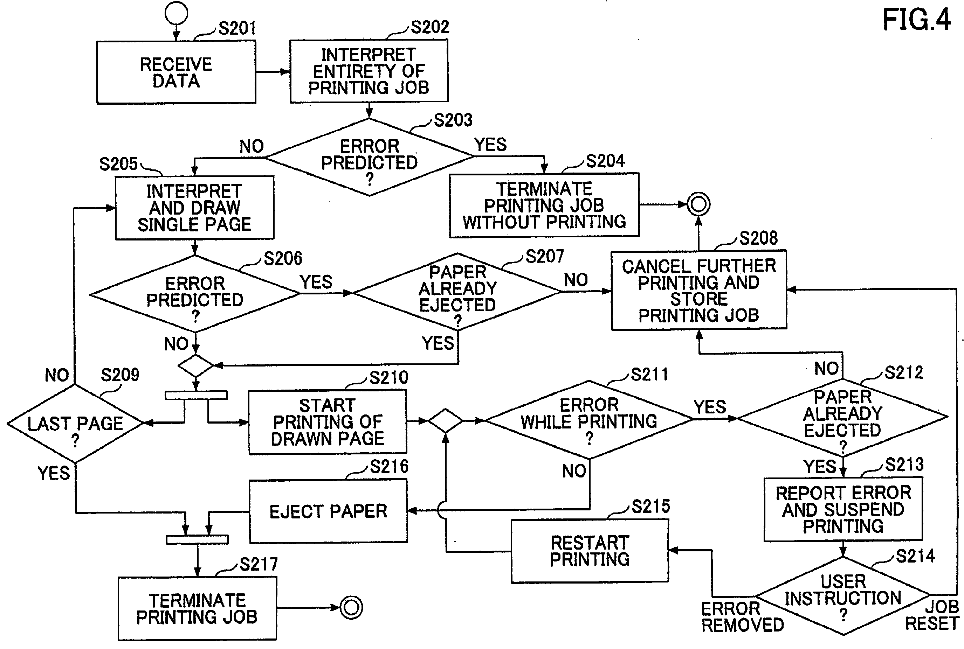

Fig. 4 is a flowchart of a second exemplified operation in which the printing job is basically stored when an error occurs, but when at least one page is already printed, the printing job is not stored and the printing operation is terminated as an error.

For example, if any printing job is automatically stored when an occurrence of an error is predicted or detected, when an occurrence of an error is predicted or detected after three pages are already printed where a printing job includes printing of five pages and the printing operation is canceled and the printing job is stored, the three papers, which are already printed, are left in a feeding tray or the like in the image forming apparatus. At this time, the three printed papers and printed papers by a subsequent printing job may be mixed, so that a user may mistakenly pick up the papers. In such a case, the stored printing job may need to be performed again, so that three pages which have already printed need to be re-printed. Therefore, according to this example, for the printing job for which at least one page is already printed (paper is ejected), the printing job is not stored even when an error occurs, thereby preventing the above problem.

In Fig. 4, when the data receiving unit 102 receives data of a printing job (step S201), the job control unit 104 controls the data interpreting unit 107 to interpret a printing condition of the entirety of the printing job (step S202). Then, the job control unit 104 determines whether an occurrence of an error is predicted based on the interpretation of the printing condition of the entirety of the printing job by the data interpreting unit 107 (step S203).

When the occurrence of an error is predicted (YES in step S203), the job control unit 104 terminates the printing job without performing a printing operation and stores the printing job in the suspended data storing area 114 (step S204).

When the occurrence of an error is not predicted in step S203 (NO in step S203), under the control of the job control unit 104, the page control unit 105 controls the data interpreting unit 107 to interpret print data of a single page and controls the image drawing unit 108 to draw image data for the single page (step S205).

Then, the job control unit 104 determines whether an occurrence of an error is predicted based on the interpretation and drawing result of the single page (step S206).

When the occurrence of an error is predicted (YES in step S206), the job control unit 104 determines whether at least one page of the printing job is already ejected (printed) (step S207). The printer control unit 103 or the engine control unit 110 stores and controls the number of ejected pages.

When no page is ejected (NO in step S207), the job control unit 104 cancels the further printing operation for the printing job and stores the printing job in the suspended data storing area 114 to terminate the printing job (step S208).

When the occurrence of an error is not predicted (NO in step S206) or when at least one page of the printing job is already ejected (YES in step S207), the job control unit 104 determines whether the last page of the printing job is drawn (step S209), and when the last page of the printing job is not yet drawn (NO in step S209), the process goes back to step S205. When it is determined that the last page of the printing job is drawn in step S209 (YES in step S209), the printing job is terminated when all of the pages are printed (step S217).

Further, when the occurrence of an error is not predicted (NO in step S206) or when at least one page of the printing job is already ejected (YES in step S207), the job control unit 104 controls the page control unit 105 to start printing of the drawn page (step S210), and monitors whether an error occurs during printing (step S211).

When an occurrence of an error is detected during printing (YES in step S211), the job control unit 104 determines whether at least one page of the printing job is already ejected (printed) (step S212).

When no page is ejected (NO in step S212), the job control unit 104 cancels the further printing operation for the printing job and stores the printing job in the suspended data storing area 114 to terminate the printing job (step S208).

When at least one page of the printing job is already ejected (YES in step S212), the job control unit 104 reports the occurrence of the error to the user and terminates (suspends) the printing operation (step S213).

Then, the job control unit 104 receives an instruction from the user (step S214). When the instruction is to reset the printing job, the job control unit 104 cancels the further printing operation for the printing job and stores the printing job in the suspended data storing area 114 to terminate the printing job (step S208).

When the cause of the error is removed by the user or the instruction of the user, for example, the printing condition is changed so that the error is removed, and the continuation of the printing operation is instructed, the job control unit 104 restarts the printing operation (step S215) and monitors whether there is an occurrence of an error during printing (step S211).

When the occurrence of an error is not detected during printing (NO in step S211), the engine 115 ejects a paper (step S216), and when all of the pages are printed (ejected), the job control unit 104 terminates the printing job (step S217).

### (THIRD EXEMPLIFIED OPERATION)

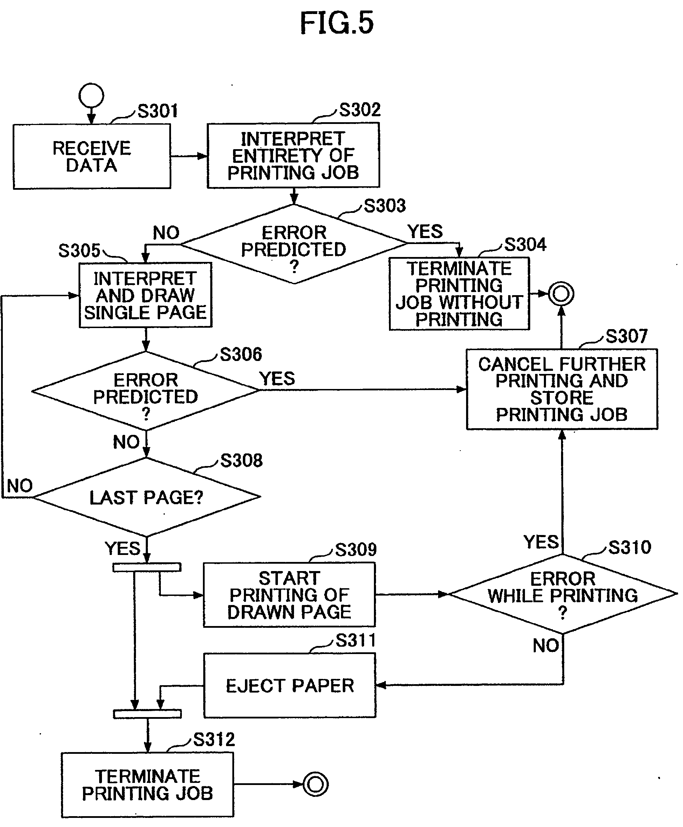

Fig. 5 is a flowchart of a third exemplified operation in which printing is not started until all pages of a printing job are drawn.

For the second exemplified operation shown in Fig. 4, the printing job is terminated without storing the printing job if at least one page is already ejected when an occurrence of an error is predicted or detected. However, in this third exemplified operation, the printing operation is not started until all pages of a printing job are drawn in order to decrease a likelihood that the printing operation is suspended.

In Fig. 5, when the data receiving unit 102 receives data of a printing job (step S301), the job control unit 104 controls the data interpreting unit 107 to interpret a printing condition of the entirety of the printing job (step S302). Then, the job control unit 104 determines whether an occurrence of an error is predicted based on the interpretation of the printing condition of the entirety of the printing job by the data interpreting unit 107 (step S303).

When the occurrence of an error is predicted (YES in step S303), the job control unit 104 terminates the printing job without performing a printing operation and stores the printing job in the suspended data storing area 114 to terminate the printing job (step S304).

When the occurrence of an error is not predicted in step S303 (NO in step S303), under the control of the job control unit 104, the page control unit 105 controls the data interpreting unit 107 to interpret print data of a single page and controls the image drawing unit 108 to draw image data for the single page (step S305). Then, the job control unit 104 determines whether an occurrence of an error is predicted based on the interpretation and drawing result of the single page (step S306).

When the occurrence of an error is predicted (YES in step S306), the job control unit 104 cancels the further printing operation for the printing job and stores the printing job in the suspended data storing area 114 to terminate the printing job (step S307).

When the occurrence of an error is not predicted (NO in step S306), the job control unit 104 determines whether the last page of the printing job is drawn (step S308), and when the last page of the printing job is not yet drawn (NO in step S307), the process goes back to step S305. When it is determined that the last page of the printing job is drawn in step S308 (YES in step S308), the printing job is terminated when all of the pages are printed (step S312).

Further, when it is determined that the last page of the printing job is drawn without the occurrence of an error is being predicted, in step S308 (YES in step S308), the job control unit 104 controls the page control unit 105 to start printing of the drawn pages (step S309), and monitors whether an error occurs during printing (step S310).

When an occurrence of an error is detected during printing (YES in step S310), the job control unit 104 cancels further printing of the printing job, and stores the printing job in the suspended data storing area 114 to terminate the printing job (step S307).

When the occurrence of an error is not detected during printing (NO in step S310), the engine 115 ejects a paper (step S311), and when all of the pages are printed (ejected), the job control unit 104 terminates the printing job (step S312).

Further, in this example, when the occurrence of an error is detected after the printing operation is started (YES in step S310), the printing operation is canceled and the printing job is stored (step S307). However, in this example as well, similar to that explained in the second exemplified operation with reference to Fig. 4, when the occurrence of an error is detected after at least one page is already ejected, the error may be reported to a user and the image forming apparatus 1 may wait for an instruction from the user.

### (FOURTH EXEMPLIFIED OPERATION)

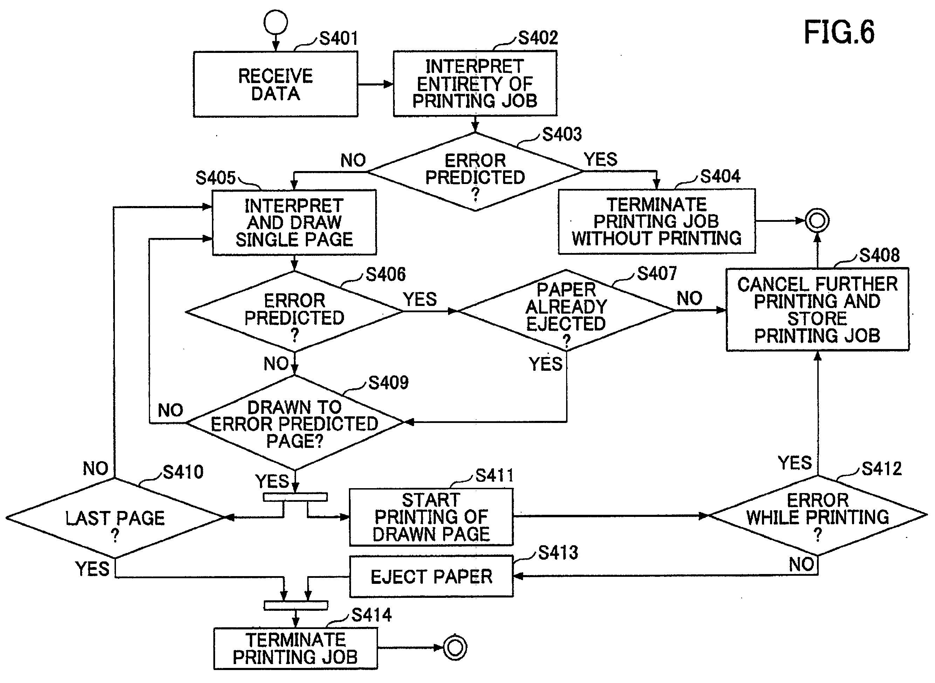

Fig. 6 is a flowchart of a fourth exemplified operation in which an occurrence of an error is not predicted for all of the pages, but an occurrence of an error is predicted for a predetermined number of pages which is set in the image forming apparatus 1.

For the third exemplified operation shown in Fig. 5, the printing operation is not started until all pages of a printing job are drawn. However, in this fourth exemplified operation, the printing operation is started when a predetermined number of pages set in the image forming apparatus 1, not all of the pages, are drawn.

For the third exemplified operation shown in Fig. 5, the printing is not started until all of the pages of the printing job are drawn, therefore decreasing a likelihood that the printing operation is suspended. However, a "first print" period (the period between a time when a printing job is received and a time when a first page is printed) becomes longer. In this fourth exemplified operation, although occurrences of errors for a predetermined plural number of pages are previously predicted, they are not predicted for all of the pages, and are limited to a certain extent so that the likelihood that the printing operation is suspended can be decreased while also ensuring that the "first print" period is not unduly delayed.

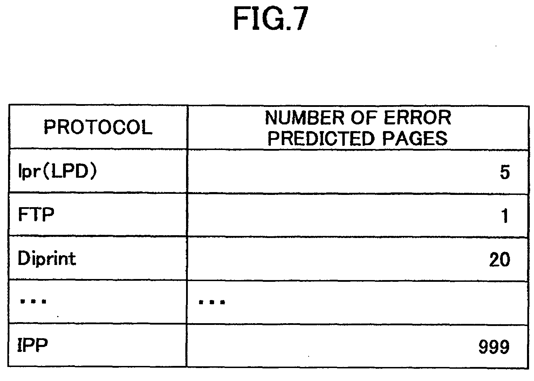

Fig. 7 is an example of a data structure of a table used in the fourth exemplified operation. In this table, a protocol for printing, and a predetermined number of pages for which an occurrence of an error is to be predicted correspond with each other. The predetermined number of pages for which an occurrence of an error is to be predicted may be previously set in the image forming apparatus 1, may be set by a user via the user interface, or may be automatically changed by the image forming apparatus 1 in accordance with the protocol for printing. The method or way for setting the predetermined number is not limited. For all cases, the set values are stored in the memory area 112 of the image forming apparatus 1 in the table form as shown in Fig. 7.

Further, the predetermined number of pages for which an occurrence of an error is to be predicted may be set for each of the printing conditions (item and number for each condition) in a table (not shown in the drawings, but similar to that shown in Fig. 7) and stored in the memory area 112 of the image forming apparatus 1. These set values may be referred to when printing. In this case as well, the predetermined number of pages for which an occurrence of an error is to be predicted may be previously set in the image forming apparatus 1, may be set by a user via the user interface, or may be automatically changed by the image forming apparatus 1 in accordance with the printing condition.

The image forming apparatus 1 stores the table as shown in Fig. 7 in the memory area 112. The job control unit 104 refers to the table when a printing job is received and automatically changes the number of pages for which an occurrence of an error is to be predicted.

With this, for a protocol for which a printing order is important, the predetermined number of pages for which an occurrence of an error is to be predicted may be set smaller or set zero, while for a protocol which may be used at an office or the like where a large number of people commonly use the image forming apparatus 1 and many printing jobs are sent to the image forming apparatus 1 at the same time, the predetermined number of pages for which an occurrence of an error is to be predicted may be set larger.

In Fig. 6, when the data receiving unit 102 receives data of a printing job (step S401), the job control unit 104 controls the data interpreting unit 107 to interpret a printing condition of the entirety of the printing job (step S402). Then, the job control unit 104 determines whether an occurrence of an error is predicted based on the interpretation of the printing condition of the entirety of the printing job by the data interpreting unit 107 (step S403).

When the occurrence of an error is predicted (YES in step S403), the job control unit 104 terminates the printing job without performing a printing operation and stores the printing job in the suspended data storing area 114 (step S404).

When the occurrence of an error is not predicted in step S403 (NO in step S403), under the control of the job control unit 104, the page control unit 105 controls the data interpreting unit 107 to interpret print data of a single page and controls the image drawing unit 108 to draw image data for the single page (step S405). Then, the job control unit 104 determines whether an occurrence of an error is predicted based on the interpretation and drawing result of the single page (step S406).

When the occurrence of an error is predicted (YES in step S406), the job control unit 104 determines whether at least one page of the printing job is already ejected (printed) (step S407).

When no page is ejected (NO in step S407), the job control unit 104 cancels the further printing operation for the printing job and stores the printing job in the suspended data storing area 114 to terminate the printing job (step S408).

When the occurrence of an error is not predicted (NO in step S406) or when at least one page of the printing job is already ejected (YES in step S407), the job control unit 104 refers to the table as shown in Fig. 7, and determines whether the predetermined number of pages for which an occurrence of an error is to be predicted or the last page of the printing job is drawn (step S409).

When the predetermined number of pages or the last page of the printing job is not yet drawn (NO in step S409), the process goes back to step S405.

When it is determined that the predetermined number of pages or the last page of the printing job is drawn in step S409 (YES in step S409), the job control unit 104 determines whether the last page of the printing job is drawn (step S410), and when the last page of the printing job is not yet drawn (NO in step S410), the process goes back to step S405. When it is determined that the last page of the printing job is drawn in step S410 (YES in step S410), the printing job is terminated when all of the pages are printed (step S414).

When the predetermined number of pages or the last page of the printing job is drawn in step S409 without the occurrence of an error is being predicted, (YES in step S409), the job control unit 104 controls the page control unit 105 to start printing of the drawn page (step S411), and monitors whether an error occurs during printing (step S412).

When an occurrence of an error is detected during printing, the job control unit 104 cancels further printing of the printing job, and stores the printing job in the suspended data storing area 114 to terminate the printing job (step S408).

When the occurrence of an error is not detected during printing (NO in step S412), the engine 115 ejects a paper (step S413), and when all of the pages are printed (ejected), the job control unit 104 terminates the printing job (step S414).

Further, in this example, when the occurrence of an error is detected after the printing operation is started (YES in step S412), the printing operation is canceled and the printing job is stored (step S408). However, in this example as well, similar to that explained in the second exemplified operation with reference to Fig. 4, when the occurrence of an error is detected after at least one page is already ejected, the error may be reported to a user and the image forming apparatus 1 may wait for an instruction from the user.

### (FIFTH EXEMPLIFIED OPERATION)

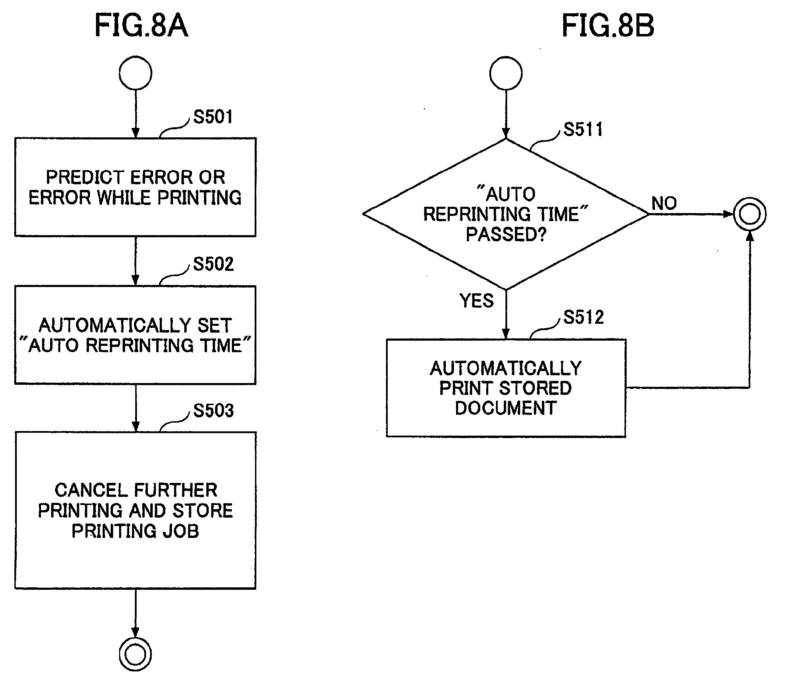

Fig. 8A and Fig. 8B are flowcharts of a fifth exemplified operation in which when a printing job is stored in the suspended data storing area 114 of the image forming apparatus 1 when an occurrence of an error is predicted or detected, an "auto reprinting time" is automatically set and the printing job is automatically reprinted at the "auto reprinting time".

In Fig. 8A, when the job control unit 104 predicts an occurrence of an error, or detects an occurrence of an error during printing (step S501), the job control unit 104 automatically sets an "auto reprinting time" (step S502) and cancels the further printing operation for the printing job and stores the printing job in the suspended data storing area 114 to terminate the printing job (step S503). At this time, the set "auto reprinting time" is stored in correspondence with the printing job in the suspended data storing area 114.

Thereafter, as shown in Fig. 8B, the job control unit 104 refers to time information of the system in the image forming apparatus 1, and determines whether the "auto reprinting time" has passed (step S511). When the "auto reprinting time" has passed (YES in step S511), the job control unit 104 automatically performs a printing operation of a document (image data) for the stored printing job (step S512). Here, when an error occurs while automatically printing, the printing operation may be canceled without reporting to a user, the printing operation may be canceled after the occurrence of an error is reported to the user, or the like, similar to those explained with reference to the first to fourth exemplified operations.

In this example, the "auto reprinting time" is automatically set by the image forming apparatus 1. Alternatively, the "auto reprinting time" may be previously set by a user and stored in the image forming apparatus 1. For example, "auto reprinting time" may be set as "5 minutes after a print job is stored because of an occurrence of an error", or "2 hours after a print job is stored because of an occurrence of an error".

### (SIXTH EXEMPLIFIED OPERATION)

For a printing job, for which it is assumed that a user may be near (in front of) the image forming apparatus 1, an occurrence of an error is not predicted, and when an error occurs during printing, the printing operation is terminated and the error is reported to the user. In this case, when the user is near the image forming apparatus 1, the user can immediately respond to remove the error. When, on the other hand, the printing job is automatically stored although the user is near the image forming apparatus 1, it is necessary for the user to do something like inputting an instruction via the user interface 111 or the like to print the printing job. Therefore, for a case when the user is likely to be near the image forming apparatus 1, it is better not to automatically store the printing job.

The printing job for which a user may be in front of the image forming apparatus 1 may be,
a printing of a stored image data,
a printing of a file stored in a medium,
a printing in which setting information for the image forming apparatus 1 is designated, or the like.

These printing jobs are just examples and the printing jobs are not limited to these. Any printing jobs for which it can be assumed that a user is in front of the image forming apparatus 1 are included.

When the job control unit 104 detects that the printing job is the above kind of printing job, the job control unit 104 moves to a mode in which an occurrence of an error is not predicted and performs a similar process explained above with reference to Fig. 1.

According to the embodiment, whether an error is likely to occur for a printing job is predicted before an actual printing operation for the printing job is started, and when the occurrence of an error is predicted, the printing operation is canceled and the printing job is stored in the image forming apparatus 1. Therefore, the likelihood that the printing operation for the image forming apparatus 1 is suspended because of an occurrence of an error can be decreased, so that a subsequent printing job, for which an error is not likely to occur, can be printed.

Further, the present embodiment may further includes a program by which functions and operations of the image forming apparatus 1 of the embodiment may be actualized or a non-transitory computer-readable recording medium having recorded thereon such an program that causes a computer to execute such functions and operations.

The present invention is not limited to the specifically disclosed embodiments, and variations and modifications may be made without departing from the scope of the present invention.

## Claims

1. An image forming apparatus comprising:
a data interpreting unit (107) configured to interpret a printing condition of a first printing job when starting the first printing job; and
a job control unit (104) configured to determine whether an occurrence of an error for the first printing job is predicted based on the interpretation of the printing condition of the t printing job by the data interpreting unit, and
terminate the first printing job when the occurrence of an error is predicted based on the interpretation of the printing condition of the first printing job by the data interpreting unit (107) and store data of the first printing job in an memory area (112) when the occurrence of the error is predicted,
**characterized in that**
the job control unit (104) is further configured to start processing a subsequent printing job when the first printing job is terminated, and
restart the terminated first printing job when the error is removed.

2. The image forming apparatus according to claim 1, wherein the data interpreting unit (107) is further configured to interpret print data of a single page for each of the pages included in the first printing job before printing the corresponding each of the pages, and the job control unit (104) is further configured to determine whether an occurrence of an error for the first print job is predicted based on the interpretation of the print data of a single page, and terminate the first printing job when the occurrence of an error is predicted based on the interpretation of the print data of a single page and store the data of the first printing job in the memory area (112).

3. The image forming apparatus according to claim 2,
wherein the job control unit (104) is further configured to, before terminating the first printing job when the occurrence of an error is predicted based on the interpretation of the print data of a single page,
determine whether at least one page included in the first printing job is already
ejected, when the occurrence of an error is predicted, terminate the first printing job when it is determined that no page is ejected yet to
cancel a printing operation for subsequent pages and store the data of the first printing job in the memory area, and
report the occurrence of an error to a user while suspending the first printing job without terminating the first printing job when it is determined that at least one page is already ejected.

4. The image forming apparatus according to claim 2 or 3, further comprising:
an image drawing unit (108) configured to draw image data for the single page for each of the pages included in the first printing job, and
the job control unit (104) is further configured to suspend starting of printing until all of the pages included in the first printing job are interpreted by the data interpreting unit (107) and drawn by the image drawing unit (108) without the occurrence of an error being predicted.

5. The image forming apparatus according to claim 2 or 3, further comprising:
an image drawing unit (108) configured to draw image data for the single page for each of the pages included in the first printing job, and
the job control unit (104) is further configured to suspend starting of printing until all of the pages included in the first printing job or a predetermined number of pages are interpreted by the data interpreting unit (107) and drawn by the image drawing unit (108) without the occurrence of an error being predicted.

6. The image forming apparatus according to claim 5, further comprising:
a memory unit (112) that stores the predetermined number of pages input by a user.

7. The image forming apparatus according to claim 5, further comprising:
a memory unit (112) that stores a table in which the predetermined number of pages is corresponded with a protocol for printing, the first printing job includes a protocol for printing, and
the job control unit (104) is further configured to determine the predetermined number of pages based on the protocol for printing included in the first printing job and the table stored in the memory unit (112).

8. The image forming apparatus according to claim 5, further comprising:
a memory unit (112) that stores a table in which the predetermined number of pages is corresponded with a printing condition of a printing job, and
the job control unit (104) is further configured to determine the predetermined number of pages based on the printing condition
included in the first printing job and the table stored in the memory unit (112).

9. The image forming apparatus according to any one of claims 1 to 3, wherein the job control unit (104) is further configured to
set an "auto reprinting time" before storing the data of the first printing job in the memory area (112),
determine whether the "auto reprinting time" has passed, and
restart printing for the first printing job when it is determined that the "auto reprinting time" has passed.

10. The image forming apparatus according to claim 9, further comprising:
a memory unit (112) that stores the "auto reprinting time".

11. The image forming apparatus according to any one of claims 1 to 3, wherein the job control unit (104) is further configured to
terminate a function of predicting the occurrence of an error when the first printing job is a kind of printing job for which a user is likely to be near the image forming apparatus.

12. The image forming apparatus according to any one of claims 1 to 3,
wherein the data interpreting unit (107) is further configured to
detect an occurrence of an error for each of the pages included in the first printing job during printing, and
terminate the first printing job when the occurrence of an error is detected to cancel a printing operation for subsequent pages and store the data of the first printing job in the memory area (112).

## Patentansprüche

1. Bilderzeugungsvorrichtung, umfassend:
eine Dateninterpretiereinheit (107), welche ausgestaltet ist
eine Druckbedingung eines ersten Druckauftrags zu interpretieren, wenn der erste Druckauftrag gestartet wird; und
eine Auftragssteuereinheit (104), welche ausgestaltet ist
zu bestimmen, ob ein Auftreten eines Fehlers für den ersten Druckauftrag basierend auf der Interpretation der Druckbedingung des ersten Druckauftrags durch die Dateninterpretiereinheit vorhergesagt wird, und
den ersten Druckauftrag zu beenden, wenn das Auftreten eines Fehlers basierend auf der Interpretation der Druckbedingung des ersten Druckauftrags durch die Dateninterpretiereinheit (107) vorhergesagt wird, und Daten des ersten Druckauftrags in einem Speicherbereich (112) zu speichern, wenn das Auftreten des Fehlers vorhergesagt wird, **dadurch gekennzeichnet dass**,
die Auftragssteuereinheit (104) ferner ausgestaltet ist
ein Bearbeiten eines nachfolgenden Druckauftrags zu starten, wenn der erste Druckauftrag beendet wird, und
den beendeten ersten Druckauftrag neu zu starten, wenn der Fehler entfernt ist.

2. Bilderzeugungsvorrichtung nach Anspruch 1,
wobei die Dateninterpretiereinheit (107) ferner ausgestaltet ist
Druckdaten einer einzelnen Seite für jede der Seiten, welche in dem ersten Druckauftrag umfasst sind, vor einem Drucken der entsprechenden jeder der Seiten zu interpretieren, und
wobei die Auftragssteuereinheit (104) ferner ausgestaltet ist
zu bestimmen, ob ein Auftreten eines Fehlers für den ersten Druckauftrag basierend auf der Interpretation der Druckdaten einer einzelnen Seite vorhergesagt wird, und
den ersten Druckauftrag zu beenden, wenn das Auftreten eines Fehlers basierend auf der Interpretation der Druckdaten einer einzelnen Seite vorhergesagt wird und die Daten des ersten Druckauftrags in dem Speicherbereich (112) zu speichern.

3. Bilderzeugungsvorrichtung nach Anspruch 2,
wobei die Auftragssteuereinheit (104) ferner ausgestaltet ist vor dem Beenden des ersten Druckauftrags, wenn das Auftreten eines Fehlers basierend auf der Interpretation der Druckdaten einer einzelnen Seite vorhergesagt wird,
zu bestimmen, ob zumindest eine Seite, welche in dem ersten Druckauftrag umfasst ist, bereits ausworfen ist, wenn das Auftreten eines Fehlers vorhergesagt wird,
den ersten Druckauftrag zu beenden, wenn bestimmt wird, dass keine Seite bereits ausgeworfen, um einen Druckvorgang für nachfolgende Seiten zu löschen, und die Daten des ersten Druckauftrags in dem Speicherbereich zu speichern, und
das Auftreten eines Fehlers an einen Benutzer zu berichten, während eines Aussetzens des ersten Druckauftrags ohne Beenden des ersten Druckauftrags, wenn bestimmt wird, dass zumindest eine Seite bereits ausgeworfen ist.

4. Bilderzeugungsvorrichtung nach Anspruch 2 oder 3, ferner umfassend:
eine Bildzeichnungseinheit (108), welche ausgestaltet ist
Bilddaten für die einzelne Seite für jede der Seiten, welche in den ersten Druckauftrag umfasst sind, zu zeichnen, und
wobei die Auftragssteuereinheit (104) ferner ausgestaltet ist
ein Starten des Druckens auszusetzen bis alle der Seiten, welche in dem ersten Druckauftrag umfasst sind durch die Dateninterpretiereinheit (107) interpretiert sind und durch die Bildzeichnungseinheit (108) gezeichnet sind, wenn kein Auftreten eines Fehlers vorhergesagt wird.

5. Bilderzeugungsvorrichtung nach Anspruch 2 oder 3, ferner umfassend:
eine Bildzeichnungseinheit (108), welche ausgestaltet ist
Bilddaten für die einzelne Seite für jede der Seiten, welche in den ersten Druckauftrag umfasst sind, zu zeichnen, und
wobei die Auftragssteuereinheit (104) ferner ausgestaltet ist
einen Starten des Druckens auszusetzen, bis alle der Seiten, welche in dem ersten Druckauftrag umfasst sind, oder eine vorbestimmte Anzahl von Seiten durch die Dateninterpretiereinheit (107) interpretiert sind und durch die Bildzeichnungseinheit (108) gezeichnet sind, wenn kein Auftreten eines Fehlers vorhergesagt wird.

6. Bilderzeugungsvorrichtung nach Anspruch 5, ferner umfassend:
eine Speichereinheit (112), welche die vorbestimmte Anzahl von Seiten speichert, die von einem Benutzer eingegeben wird.

7. Bilderzeugungsvorrichtung nach Anspruch 5, ferner umfassend:
eine Speichereinheit (112), welche eine Tabelle speichert, in welcher die vorbestimmte Anzahl von Seiten mit einem Protokoll zum Drucken in Einklang gebracht wird,
wobei der erste Druckauftrag ein Protokoll zum Drucken umfasst, und die Auftragssteuereinheit (104) ferner ausgestaltet ist
die vorbestimmte Anzahl von Seiten basierend auf dem Protokoll zum Drucken, welches in den ersten Druckauftrag umfasst ist, und der Tabelle, welche in der Speichereinheit (112) gespeichert ist, zu bestimmen.

8. Bilderzeugungsvorrichtung nach Anspruch 5, ferner umfassend eine Speichereinheit (112), welche eine Tabelle speichert, in welcher die vorbestimmte Anzahl von Seiten mit einer Druckbedingung eines Druckauftrags in Einklang gebracht wird, und
wobei die Auftragssteuereinheit (104) ferner ausgestaltet ist
die vorbestimmte Anzahl von Seiten basierend auf der Druckbedingung, welche in dem ersten Druckauftrag umfasst ist, und der Tabelle, welche in der Speichereinheit (112) gespeichert ist, zu bestimmen.

9. Bilderzeugungsvorrichtung nach einem der Ansprüche 1 bis 3, wobei die Auftragssteuereinheit (104) ferner ausgestaltet ist
eine "Auto-Neudruck-Zeit" vor dem Speichern der Daten des ersten Druckauftrags in den Speicherbereich (112) festzulegen,
zu bestimmen, ob die "Auto-Neudruck-Zeit" vergangen ist, und
ein Drucken für den ersten Druckauftrag neu zu starten, wenn bestimmt wird, dass die "Auto-Neudruck-Zeit" vergangen ist.

10. Bilderzeugungsvorrichtung nach Anspruch 9, ferner umfassend:
eine Speichereinheit (112), welche die "Auto-Neudruck-Zeit" speichert.

11. Bilderzeugungsvorrichtung nach einem der Ansprüche 1 bis 3, wobei die Auftragssteuereinheit (104) ferner ausgestaltet ist
eine Funktion des Vorhersagens des Auftretens eines Fehlers zu beenden, wenn der erste Druckauftrag eine Art von Druckauftrag ist, für welchen wahrscheinlich ein Benutzer in der Nähe der Bilderzeugungsvorrichtung ist.

12. Bilderzeugungsvorrichtung nach einem der Ansprüche 1 bis 3, wobei die Dateninterpretiereinheit (107) ferner ausgestaltet ist
ein Auftreten eines Fehlers für jede der Seiten, welche in dem ersten Druckauftrag enthalten sind, während des Druckens zu detektieren, und
den ersten Druckauftrag zu beenden, wenn das Auftreten eines Fehlers detektiert wird, um einen Druckbetrieb für die nachfolgenden Seiten zu löschen und die Daten des ersten Druckauftrags in den Speicherbereich (112) zu speichern.

## Revendications

1. Appareil de formation d'image comprenant :
une unité d'interprétation de données (107) configurée pour
interpréter une condition d'impression d'une première tâche d'impression lors du commencement de la première tâche d'impression ; et
une unité de commande de tâche (104) configurée pour
déterminer si une occurrence d'une erreur pour la première tâche d'impression est prédite sur la base de l'interprétation de la condition d'impression de la première tâche d'impression par l'unité d'interprétation de données ; et
mettre fin à la première tâche d'impression lorsque l'occurrence d'une erreur est prédite sur la base de l'interprétation de la condition d'impression de la première tâche d'impression par l'unité d'interprétation de données (107) et stocker des données de la première tâche d'impression dans une zone de mémoire (112) lorsque l'occurrence de l'erreur est prédite,
**caractérisé en ce que**
l'unité de commande de tâche (104) est en outre configurée pour
commencer le traitement d'une tâche d'impression subséquente lorsqu'il est mis fin à la première tâche d'impression, et
recommencer la première tâche d'impression à laquelle il a été mis fin lorsque l'erreur est supprimée.

2. Appareil de formation d'image selon la revendication 1, dans lequel l'unité d'interprétation de données (107) est en outre configurée pour
interpréter des données d'impression d'une seule page pour chacune des pages incluses dans la première tâche d'impression avant d'imprimer ladite chacune correspondante des pages, et
l'unité de commande de tâche (104) est en outre configurée pour
déterminer si une occurrence d'une erreur pour la première tâche d'impression est prédite sur la base de l'interprétation des données d'impression d'une seule page, et
mettre fin à la première tâche d'impression lorsque l'occurrence d'une erreur est prédite sur la base de l'interprétation des données d'impression d'une seule page et stocker les données de la première tâche d'impression dans la zone de mémoire (112).

3. Appareil de formation d'image selon la revendication 2,
dans lequel l'unité de commande de tâche (104) est en outre configurée pour, avant de mettre fin à la première tâche d'impression lorsque l'occurrence d'une erreur est prédite sur la base de l'interprétation des données d'impression d'une page,
déterminer si au moins une page incluse dans la première tâche d'impression est déjà éjectée, lorsque l'occurrence d'une erreur est prédite,
mettre fin à la première tâche d'impression lorsqu'il est déterminé qu'aucune page n'est éjectée encore pour annuler une opération d'impression pour des pages subséquentes et stocker les données de la première tâche d'impression dans la zone de mémoire, et
rapporter l'occurrence d'une erreur à un utilisateur tout en suspendant la première tâche d'impression sans mettre fin à la première tâche d'impression lorsqu'il est déterminé qu'au moins une page est déjà éjectée.

4. Appareil de formation d'image selon la revendication 2 ou 3, comprenant en outre :
une unité de dessin d'image (108) configurée pour
dessiner des données d'image pour la seule page pour chacune des pages incluses dans la première tâche d'impression, et
l'unité de commande de tâche (104) est en outre configurée pour
suspendre le commencement de l'impression jusqu'à ce que toutes les pages incluses dans la première tâche d'impression soient interprétées par l'unité d'interprétation de données (107) et dessinées par l'unité de dessin d'image (108) sans que l'occurrence d'une erreur ne soit prédite.

5. Appareil de formation d'image selon la revendication 2 ou 3, comprenant en outre :
une unité de dessin d'image (108) configurée pour
dessiner des données d'image pour la seule page pour chacune des pages incluses dans la première tâche d'impression, et
l'unité de commande de tâche (104) est en outre configurée pour
suspendre le commencement de l'impression jusqu'à ce que toutes les pages incluses dans la première tâche d'impression ou qu'un nombre prédéterminé de pages soient interprétées par l'unité d'interprétation de données (107) et dessinées par l'unité de dessin d'image (108) sans que l'occurrence d'une erreur ne soit prédite.

6. Appareil de formation d'image selon la revendication 5, comprenant en outre :
une unité de mémoire (112) qui stocke le nombre prédéterminé de pages entré par un utilisateur.

7. Appareil de formation d'image selon la revendication 5, comprenant en outre :
une unité de mémoire (112) qui stocke une table dans laquelle le nombre prédéterminé de pages est mis en correspondance avec un protocole pour l'impression,
la première tâche d'impression inclut un protocole pour l'impression, et
l'unité de commande de tâche (104) est en outre configurée pour
déterminer le nombre prédéterminé de pages sur la base du protocole pour l'impression inclus dans la première tâche d'impression et de la table stockée dans l'unité de mémoire (112).

8. Appareil de formation d'image selon la revendication 5, comprenant en outre :
une unité de mémoire (112) qui stocke une table dans laquelle le nombre prédéterminé de pages est mis en correspondance avec une condition d'impression d'une tâche d'impression, et
l'unité de commande de tâche (104) est en outre configurée pour
déterminer le nombre prédéterminé de pages sur la base de la condition d'impression incluse dans la première tâche d'impression et de la table stockée dans l'unité de mémoire (112).

9. Appareil de formation d'image selon l'une quelconque des revendications 1 à 3, dans lequel l'unité de commande de tâche (104) est en outre configurée pour
établir un « temps de réimpression automatique » avant de stocker les données de la première tâche d'impression dans la zone de mémoire (112),
déterminer si le « temps de réimpression automatique » est passé, et
recommencer l'impression pour la première tâche d'impression lorsqu'il est déterminé que le « temps de réimpression automatique » est passé.

10. Appareil de formation d'image selon la revendication 9, comprenant en outre :
une unité de mémoire (112) qui stocke le « temps de réimpression automatique ».

11. Appareil de formation d'image selon l'une quelconque des revendications 1 à 3, dans lequel l'unité de commande de tâche (104) est en outre configurée pour
mettre fin à une fonction de prédiction de l'occurrence d'une erreur lorsque la première tâche d'impression est un type de tâche d'impression pour lequel un utilisateur est susceptible d'être à proximité de l'appareil de formation d'image.

12. Appareil de formation d'image selon l'une quelconque des revendications 1 à 3, dans lequel l'unité d'interprétation de données (107) est en outre configurée pour
détecter une occurrence d'une erreur pour chacune des pages incluses dans la première tâche d'impression au cours de l'impression, et
mettre fin à la première tâche d'impression lorsque l'occurrence d'une erreur est détectée pour annuler une opération d'impression pour des pages subséquentes et stocker les données de la première tâche d'impression dans la zone de mémoire (112).
